# EUROPÄISCHE PATENTSCHRIFT

(11) **EP 0 454 664 B1**
(45) Veröffentlichungstag und Bekanntmachung des Hinweises auf die Patenterteilung: **04.08.1993**
(21) Anmeldenummer: 89901531.7
(22) Anmeldetag: 26.01.1989
(51) Int. Cl.: H02K 9/06, F04D 29/26, F16D 1/08

(54) **ELEKTRISCHE MASCHINE MIT VERTIKALER WELLE**
ELECTRIC MACHINE WITH VERTICAL SHAFT
MACHINE ELECTRIQUE A ARBRE VERTICAL

(43) Veröffentlichungstag der Anmeldung: 06.11.1991
(73) Patentinhaber: SIEMENS AKTIENGESELLSCHAFT, 80333 München (DE)
(72) Erfinder: LANG, Karl, D-1000 Berlin 45 (DE)
(86) Internationale Anmeldenummer: DE8900047
(87) Internationale Veröffentlichungsnummer: WO9009052

(56) Entgegenhaltungen:
- DE-A- 2 135 653
- US-A- 2 286 750

## Beschreibung

Die Erfindung bezieht sich auf eine elektrische Maschine mit vertikaler Welle und einem auf der Läuferwelle unterhalb des Läuferblechpaketes an einer Nabe zentrierten und lösbar befestigten Lüfter.

Bei derartigen bekannten eigenbelüfteten vertikalen elektrischen Maschinen ist es üblich, den die Kühlluft umwälzenden Lüfter unterhalb des aktiven Teils des Läufers so anzuordnen, daß die Kühlluft mit möglichst wenig Verunreinigungen oberhalb der Maschine angesaugt und im Bodenbereich ausgeblasen werden kann. Weiterhin muß der Läufer für Wartungszwecke noch oben aus dem Maschinengehäuse herausgehoben werden können. Dazu muß aber der Lüfter, der im allgemeinen einen größeren Durchmesser als der Läufer hat, zunächst abgeschraubt und im Gehäuse abgelegt werden.

Zur Befestigung des Lüfters an der Nabe dienen meist axial verlaufende Schrauben. Bei der nach der Wartung erfolgenden Montage des Läufers muß der Lüfter dann von neuem an der Nabe zentriert werden und die Lage der Befestigungslöcher von Lüfter und Nabe müssen in Umfangsrichtung genau übereinstimmen, um die axialen Schrauben einführen zu können. Dies kann bei Maschinen größerer Leistung Schwierigkeiten bereiten, da die Einsicht auf den Ort der Lüfterbefestigung durch das Gehäuse erschwert ist. Außerdem behindert das Gewicht, sowohl des Läufers der elektrischen Maschine als auch des Lüfters, den Montagevorgang.

Weiterhin ist aus der DE-A-21 35 653 eine lösbare Verbindung zwischen einen Haubenaufsatz, der zur Belüftung dienen kann, und einem Maschinengehäuse, insbesondere einer elektrischen Maschine, bekannt. Diese verwendet selbständige Verschlußhaken, die mit axial ausgerichteten Schrauben an Vorsprüngen der Haube befestigt sind und in Aussparungen von Versteifungselementen des Gehäuses eingreifen. Beim Lösen der Verbindung werden die axialen Schrauben soweit herausgeschraubt, daß der Verschlußhaken aus der Aussparung um 180° herausgedreht werden kann. Er bleibt aber unverlierbar in den Vorsprüngen hängen.

Der Erfindung liegt die Aufgabe zugrunde, die zentrierende lösbare Befestigung des Lüfters auf der Nabe der Läuferwelle so auszubilden, daß eine leichte Montage bzw. Demontage möglich ist.

Zur Lösung dieser Aufgabe ist eine vertikale elektrische Maschine der eingangs beschriebenen Art gemäß der Erfindung so ausgebildet, daß die Nabe für den Lüfter auf der dem Läuferblechpaket abgewandten Stirnseite einen ringförmigen, in radialer Richtung hinterfaßbaren Vorsprung aufweist, daß die Lüfterscheibe an mehreren, mindestens drei, gleichmäßig über den Umfang verteilten Stellen in radialer Richtung bewegbare Klemmstücke trägt, die form- und kraftschlüssig an dem Vorsprung zum Eingriff bringbar sind und daß auf der Halterung jedes Klemmstückes an der Lüfterscheibe zumindest ein Anschlag vorgesehen ist, welcher die radiale Bewegung des Klemmstückes nach innen begrenzt.

Es ist somit zwischen dem Lüfter und der auf der Läuferwelle befindlichen Nabe eine Klemmverbindung vorgesehen, die von der Umfangslage der Lüfterscheibe gegenüber der Nabe unabhängig ist. Infolge der Verwendung von ringförmigen bzw. gleichmäßig verteilten Teilen entsteht keine zusätzliche Unwucht.

Bei der gemäß der Erfindung ausgebildeten vertikalen elektrischen Maschine sind an mehreren, mindestens drei, längs des inneren Umfanges der Lüfterscheibe gleichmäßig verteilten Stellen zu diesem Zweck Klemmstücke vorgesehen, die durch eine radial nach außen gerichtete Bewegung formschlüssig an einer entsprechenden hinterfaßbaren Gegenfläche eines Vorsprungs an der Lüfternabe zur Anlage gelangen und die form- und kraftschlüssige Klemmverbindung bewirken. Durch eine entgegengesetzt gerichtete Bewegung, radial nach innen, wird die Klemmverbindung in einfacher Weise wieder gelöst. Dabei ist die Bewegungsmöglichkeit für das Klemmstück in radialer Richtung nach innen durch einen Anschlag begrenzt, der verhindert, daß sich bei der Demontage das Klemmstück von der Befestigung an der Lüfterscheibe lösen und in das Maschinengehäuse fallen kann. Der Anschlag erlaubt die für das Herstellen und Lösen der form- und kraftschlüssigen Verklemmung erforderliche Bewegungsfreiheit in radialer Richtung. Da der den Formschluß für die Klemmverbindung ermöglichende Vorsprung an der Lüfternabe ringförmig ausgebildet ist, wird eine völlige Unabhängigkeit von der

Umfangslage erreicht, so daß ein Verdrehen des Läufers gegenüber dem im Gehäuse verbleibenden Lüfter keinen Einfluß auf deren gegenseitiger Befestigung aneinander hat.

Die radiale Bewegung des Klemmstückes zur Herstellung der Klemmverbindung kann in einfachster Weise durch eine radial gerichtete Schraube bewirkt werden, die eine Gewindebohrung im Klemmstück durchsetzt und an der Lüfterscheibe gehalten ist, wobei diese Schraube ebenfalls den Anschlag trägt, der in Abstand vor der inneren Mantelfläche des Klemmstückes liegt. Dieser Anschlag begrenzt die radiale Bewegungsmöglichkeit des Klemmstückes nach innen derart, daß der zur Klemmverbindung erforderliche Formschluß hergestellt oder gelöst werden kann, ohne daß das Klemmstück sich von der Lüfterscheibe lösen kann.

Es empfiehlt sich weiterhin, daß das Klemmstück mit einem sich in radialer Richtung erstreckenden Ansatz versehen ist, der innerhalb des gesamten möglichen radialen Verschiebungsbereiches für das Klemmstück an der Lüfterscheibe geführt ist. Dadurch wird das Klemmstück gegen ein Verdrehen gegenüber der Lüfterscheibe bzw. der Lüfternabe gesichert.

Im folgenden sei die Erfindung noch anhand des in den Figuren 1 bis 3 der Zeichnung dargestellten Ausführungsbeispiels näher erläutert. Figur 1 zeigt, schematisch dargestellt, einen teilweisen Längsschnitt durch eine elektrische Maschine mit vertikaler Welle. In den Figuren 2 und 3 ist in vergrößertem Maßstab eine Ansicht von unten auf die Befestigung der Lüfterscheibe an der Lüfternabe und in Figur 3 ein entsprechender Radialschnitt durch diese Befestigung dargestellt.

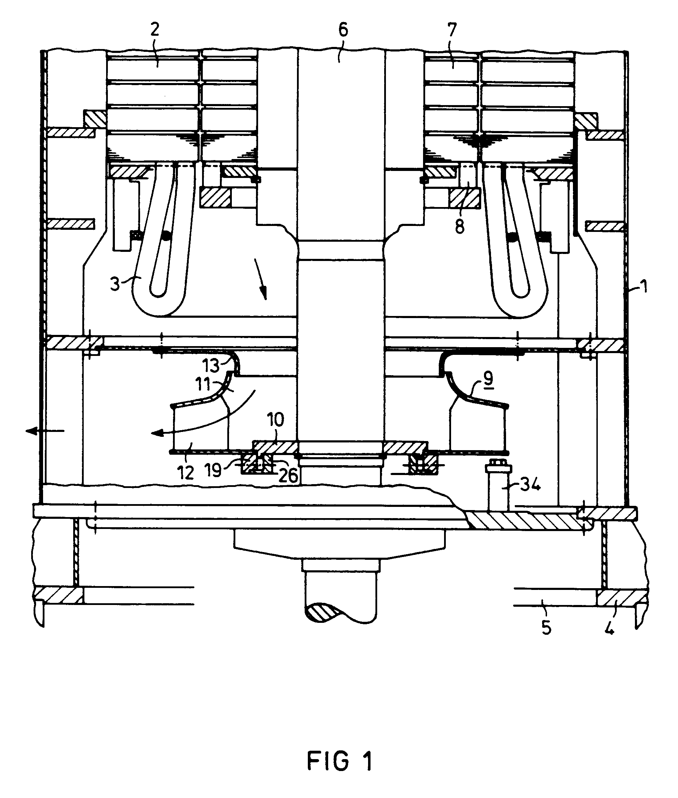

Ein elektrischer Hochspannungsmotor größerer Leistung zum Antrieb einer Arbeitsmaschine, insbesondere einer Pumpe, ist als vertikale elektrische Maschine ausgebildet. Das Maschinengehäuse 1 mit dem Ständer 2 und der Ständerwicklung 3, von dem in der Figur 1 nur der untere Teil gezeigt ist, steht auf einer Bodenplatte 4 über einer Öffnung 5, die von der senkrecht zur Bodenplatte 4 stehenden vertikalen Läuferwelle 6 durchsetzt ist und unter der sich die nicht dargestellte Arbeitsmaschine befindet, die von der Läuferwelle 6 angetrieben wird. Die Läuferwelle 6 trägt ebenfalls das Läuferblechpaket 7 mit einer Käfigwicklung 8.

Zwecks Eigenbelüftung des Hochspannungsmotors ist unterhalb des elektrisch aktiven Teils - gebildet aus Ständer 2 mit Ständerwicklung 3 und Läuferblechpaket 7 mit Käfigwicklung 8 - auf der Läuferwelle 6 der Lüfter 9 angeordnet, der an einer auf der Läuferwelle 6 aufgeschrumpften Nabe 10 zentriert und lösbar befestigt ist. Dieser Lüfter 9 ist als Radiallüfter ausgebildet und saugt mit Hilfe der auf der Lüfterscheibe 11 angeordneten Lüfterflügel 12 Kühlluft an, die über Eintrittsöffnungen im nicht dargestellten oberen Teil des Maschinengehäuses 1 in die Maschine eintritt und von dem Lüfter 9 über benachbart liegende, ebenfalls nicht dargestellte Öffnungen im Maschinengehäuse 1 im unteren Teil wieder ausgeblasen wird. Der Kühlluftstrom ist in Figur 1 durch Pfeile angedeutet. Zur besseren Luftführung ist außerdem vor dem Ansaugbereich des Lüfters 9 eine Luftführungsdüse 13 angeordnet, die am Maschinengehäuse 1 befestigt ist.

Bei elektrischen Hochspannungsmotoren besteht die Notwendigkeit, gelegentlich zu Wartungsaufgaben den elektrisch aktiven Teil des Hochspannungsmotors zugänglich zu machen. Dazu ist insbesondere die Läuferwelle 6 mit dem Läuferblechpaket 7 und der Käfigwicklung 8 nach oben aus dem Maschinengehäuse 1 herauszuheben. Da aber aufgrund des für eine wirksame Kühlung des Hochspannungsmotors erforderlichen Kühlluftumsatzes der Lüfter 9, der sich ebenfalls auf der Läuferwelle 6 befindet, meist einen größeren Außendurchmesser aufweist als das Läuferblechpaket 7, muß vor einer derartigen Demontage die Befestigung der Lüfterscheibe 11 an der Nabe 10 gelöst werden. Die Läuferwelle 6 kann dann gemeinsam mit der Nabe 10 herausgehoben werden, da der Durchmesser der Nabe 10 kleiner als der Innendurchmesser der Lüftführungsdüse 13 und der Innendurchmesser des Ständers 2 ist.

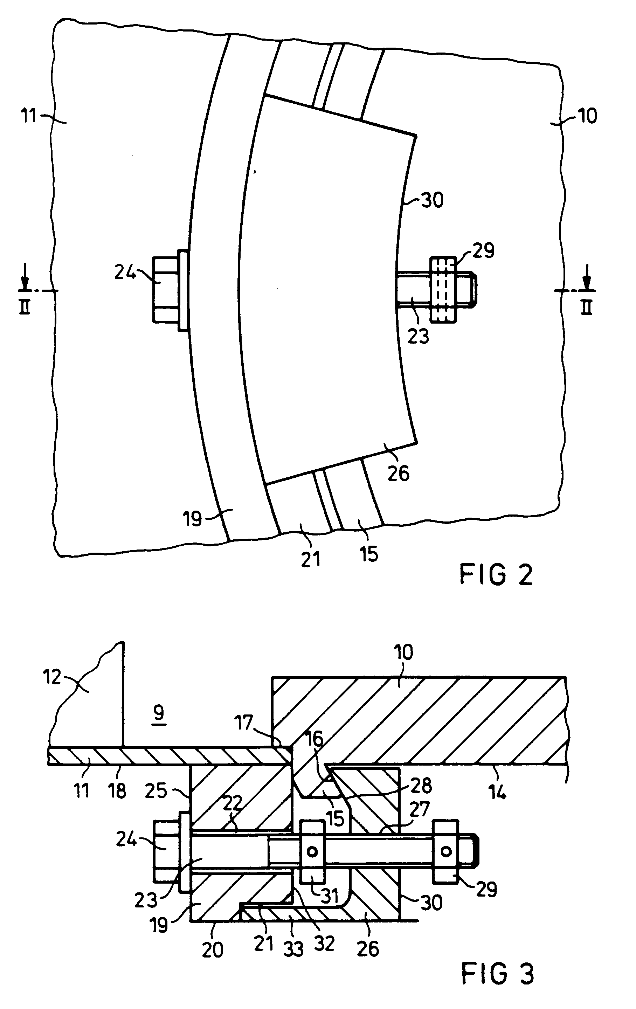

Zur Erleichterung dieser erforderlichen Demontagen bzw. Montagen des Lüfters 9 von der Läuferwelle 6 ist die lösbare und zentrierende Verbindung zwischen der Nabe 10 und der Lüfterscheibe 11 als Klemmverbindung ausgebildet, die in den Figuren 2 und 3 in vergrößertem Maßstab dargestellt ist. Für gleiche Teile sind die gleichen Bezugszeichen beibehalten.

An der Nabe 10 für den Lüfter 9 ist auf der dem Läuferblechpaket 7 abgewandten Stirnseite 14 ein ringförmiger Vorsprung 15 vorgesehen, der radial innen durch die schräge Fläche 16 begrenzt ist. Radial außen geht der Vorsprung 15 in die Zentrierringnut 17 über. An dieser Zentrierringnut 17 kommt die Lüfterscheibe 11 zur Anlage und somit zentriert.

An der Lüfterscheibe 11 ist auf der den Lüfterflügeln 12 abgewandten Stirnseite 18 ein vorstehender Ringkörper 19 angeordnet, der auf seiner Stirnfläche 20 mit einer einseitig offenen Ringnut 21 versehen ist. An mehreren, längs des Umfanges gleichmäßig verteilten Stellen, mindestens an drei Stellen, sind in diesem Ringkörper 19 radial gerichtete Durchgangsbohrungen 22 vorgesehen. Diese Durchgangsbohrungen 22 werden jeweils von einer Schraube 23 durchsetzt, deren Kopf 24 an der radial außenliegenden Mantelfläche 25 des Ringkörpers 19 zur Anlage gelangt. Diese Schraube 23 trägt jeweils ein ringsegmentförmig ausgebildetes Klemmstück 26 in dessen radialer Gewindebohrung 27 die Schraube 23 eingeschraubt ist. An dem Klemmstück 26 ist eine radial außenliegende schräge Fläche 28 vorgesehen, die in ihrer Neigung und ihrer Anordnung der schrägen Fläche 16 am Vorsprung 15 der Nabe 10 entspricht.

Wird nun die Schraube 23 in Drehung versetzt, wobei der Kopf 24 weiterhin an der Mantelfläche 25 verbleibt, so bewirkt die Drehung in der einen Drehrichtung eine radial nach innen gerichtete Bewegung des Klemmstücks 26 und eine Drehung in der entgegengesetzte Drehrichtung eine radial nach außen gerichtete Bewegung. Dadurch kann die schräge Fläche 28 am Klemmstück 26 form- und kraftschlüssig an der schrägen Fläche 16 des Vorsprungs 15 zur Anlage gebracht bzw. wieder gelöst werden. Die so hergestellte Klemmverbindung erfolgt selbsttätig, da sich die beiden schrägen Flächen 16 und 28 zwangsläufig aneinander anlegen.

Um zu vermeiden, daß bei der einer radial nach innen gerichteten Bewegung des Klemmstücks 26 dieses von der Schraube 23 herunterfallen kann, ist auf der Schraube 23 ein innerer Anschlag 29 befestigt, der vor der Mantelfläche 30 des Klemmstücks 26 mit einem so großen Abstand angeordnet ist, daß er das völlige Lösen des Formschlusses bei der Klemmverbindung ermöglicht. Ein zweiter Anschlag 31, der ebenfalls auf der Schraube 23 angeordnet ist, liegt vor der Mantelfläche 32 am Ringkörper 19 und verbessert die Halterung der Schraube 23 im Ringkörper 19 bzw. bewirkt, wenn er an dieser Mantelfläche 32 zur Anlage gelangt, ein zwangsläufiges Verschieben des Klemmstückes 26 nach innen, so daß sich die Klemmverbindung löst.

Weiterhin ist am Klemmstück 26 ein radial nach außen gerichteter Ansatz 33 vorgesehen, der in die Ringnut 21 des Ringkörpers 19 eingreift. Die Länge dieses Ansatzes 33 ist so gewählt, daß dieser während der gesamten radialen Bewegung des Klemmstücks 26 innnerhalb der Ringnut 21 verbleibt, so daß das Klemmstück 26 im Ringkörper 19 geführt und gegen ein Verdrehen gesichert ist.

Durch diese besonders ausgebildetete Klemmverbindung zwischen der Nabe 10 und der Lüfterscheibe 11 mit Hilfe der durch Drehung der radial gerichteten Schraube 23 erfolgten radialen Bewegung des Klemmstückes 26 auf die schräge Fläche 16 des Vorsprungs 15 zu oder weg, kann in einfachster Weise die Lüfterscheibe 11 an der Nabe 10 befestigt oder wieder demontiert werden. Die Zentrierung der Lüfterscheibe 11 erfolgt dabei automatisch im Zentrierrand 17. Durch die Verwendung der ringförmigen Teile an der Lüfterscheibe, nämlich dem Ringkörper 19 und an der Nabe 10, nämlich den Vorsprungring 15 ist diese Verbindung völlig unabhängig von der Umfangslage der Lüfterscheibe 11 gegenüber der Nabe 10. Eine Verdrehung der Läuferwelle 6 während der Wartungsarbeiten bei herausgehobenen Läufer hat somit keinerlei Einfluß auf die Wiederherstellung der Verbindung zwischen der Lüfterscheibe 11 und der Nabe 10.

Da die Lüfterscheibe 11 mit den Lüfterflügeln 12 bei derartigen Hochspannungsmotoren ein verhältnismäßig großes Gewicht hat, empfiehlt es sich an mehreren, längs des Umfanges verteilten Stellen Stützschrauben 34 vorzusehen, die vor dem Lösen der Klemmverbindung an der Stirnseite 18 der Lüfterscheibe 11 zur Anlage gebracht werden und die dann diese Lüfterscheibe 11 auch in demontierten Zustand abstützen. Dadurch vereinfacht sich die Wiedermontage, wenn die Läuferwelle 6 mit der Nabe 10 wieder mit der Lüfterscheibe 11 verbunden werden soll.

### Bezugszeichenliste

- 1 =: Maschinengehäuse
- 2 =: Ständer
- 3 =: Ständerwicklung
- 4 =: Bodenplatte
- 5 =: Öffnung
- 6 =: Läuferwelle
- 7 =: Läuferblechpaket
- 8 =: Käfigwicklung
- 9 =: Lüfter
- 10 =: Nabe
- 11 =: Lüfterscheibe
- 12 =: Lüfterflügel
- 13 =: Lüfterführungsdüse
- 14 =: Stirnseite der Nabe 10
- 15 =: ringförmiger Vorsprung
- 16 =: schräge Fläche am Vorsprung 15
- 17 =: Zentrierringnut
- 18 =: Stirnseite der Lüfterscheibe 11
- 19 =: Ringkörper
- 20 =: Stirnfläche
- 21 =: Ringnut
- 22 =: Durchgangsbohrung
- 23 =: Schraube
- 24 =: Kopf der Schraube 23
- 25 =: radial außenliegende Mantelfläche des Ringkörpers 19
- 26 =: Klemmstück
- 27 =: Gewindebohrung im Klemmstück 26
- 28 =: schräge Fläche am Klemmstück 26
- 29 =: innerer Anschlag
- 30 =: Mantelfläche des Klemmstückes 26
- 31 =: Anschlag
- 32 =: Mantelfläche
- 33 =: Ansatz am Klemmstück 26
- 34 =: Stützschrauben

## Patentansprüche

1. Elektrische Maschine mit vertikaler Welle und einem auf der Läuferwelle (6) unterhalb des Läuferblechpaketes (7) an einer Nabe (10) zentrierten und lösbar befestigten Lüfter (9) **dadurch gekennzeichnet,** daß die Nabe (10) für den Lüfter auf der dem Läuferblechpaket (7) abgewandten Stirnseite (14) einen ringförmigen, in radialer Richtung hinterfaßbaren Vorsprung (15) aufweist,
daß die Lüfterscheibe (11) an mehreren, mindestens drei, gleichmäßig über den Umfang verteilten Stellen in radialer Richtung bewegbare Klemmstücke (26) trägt, die Form- und kraftschlüssig an dem Vorsprung (15) zum Eingriff bringbar sind, und
daß auf der Halterung (23) jedes Klemmstückes (26) an der Lüfterscheibe (11) zumindest ein Anschlag (29) vorgesehen ist, welcher die radiale Bewegung des Klemmstückes (26) nach innen begrenzt.

2. Elektrische Maschine nach Anspruch 1, **dadurch gekennzeichnet,** daß das Klemmstück (26) von einer eine Gewindebohrung (27) im Klemmstück (26) durchsetzenden, radial gerichteten Schraube (23) an der Lüfterscheibe (11) gehalten ist, welche den in Abstand vor der Mantelfläche (30) des Klemmstückes (26) liegenden Anschlag (29) trägt.

3. Elektrische Maschine nach Anspruch 1 oder 2, **dadurch gekennzeichnet,** daß das Klemmstück (26) mit einem sich in radialer Richtung erstreckenden Ansatz (33) versehen ist, der innerhalb des gesamten möglichen radialen Verschiebungsbereiches für das Klemmstück (26) an der Lüfterscheibe (11) geführt ist.

4. Elektrische Maschine nach einem der Ansprüche 1 bis 3, **dadurch gekennzeichnet,** daß der Vorsprung (15) an der Nabe (10) und das Klemmstück (26) eine jeweils entsprechende schräge Fläche (16, 28) aufweisen, die aneinander zur Anlage gelangen.

5. Elektrische Maschine nach einem der Ansprüche 1 bis 4, **dadurch gekennzeichnet,** daß das Klemmstück (26) ringsegmentförmig ausgebildet ist.

## Claims

1. Electrical machine with a vertical shaft and a fan (9) centred on the rotor shaft (6) below the rotor stack of laminations (7) on a hub (10) and mounted detachably, characterised in that the hub (10) for the fan exhibits on the front face (14) facing away from the rotor stack of laminations (7) an annular projection (15) the back of which can be engaged in radial direction, in that the fan disc (11) carries at a number of, at least three, points, distributed uniformly over the periphery, clamping pieces (26) which can be moved in the radial direction and which can be engaged at the projection (15) in a form- and force-locked manner, and in that on the holder (23) of each clamping piece (26) at the fan disc (11) at least one stop (29) is provided which limits the radial movement of the clamping piece (26) towards the inside.

2. Electrical machine according to Claim 1, characterised in that the clamping piece (26) is held on the fan disc (11) by a radially directed screw (23) which passes through a threaded hole (27) in the clamping piece (26) and which carries the stop (29) located at a distance in front of the surface area (30) of the clamping piece (26).

3. Electrical machine according to Claim 1 or 2, characterised in that the clamping piece (26) is provided with a projection (33) which extends in the radial direction and which is carried on the fan disc (11) within the total possible radial range of displacement for the clamping piece (26).

4. Electrical machine according to one of Claims 1 to 3, characterised in that the projection (15) on the hub (10) and the clamping piece (26) have an in each case corresponding oblique surface (16, 28) which come to rest against each other.

5. Electrical machine according to one of Claims 1 to 4, characterised in that the clamping piece (26) is constructed in a ring-segment shape.

## Revendications

1. Machine électrique à arbre vertical et à ventilateur (9) fixé de façon détachable sur l'arbre rotorique (6), sous le paquet de tôles rotorique (7), en position centrée sur un moyeu (10), caractérisée par le fait que le moyeu (10) pour le ventilateur présente, sur la face frontale (14) éloignée par rapport au paquet de tôles rotorique (7), une partie annulaire saillante (15), à détalonnage radial, que le disque (11) du ventilateur porte plusieurs, au moins trois, pièces de blocage (26) réparties uniformément dans le sens périphérique et mobiles radialement, lesdites pièces de blocage étant susceptibles d'être amenées en prise avec ledit appendice suivant une association par formes complémentaires et à transmission de force, et par le fait que sur le support (23) de chaque pièce de blocage (26), il est prévu, sur le disque du ventilateur (11), au moins une butée (29) qui limite le déplacement radial de la pièce de blocage (26) vers l'intérieur.

2. Machine électrique selon la revendication 1, caractérisée par le fait que la pièce de blocage (26) est fixée au disque (11) du ventilateur à l'aide d'une vis radiale (23) traversant un perçage fileté (27) ménagé dans la pièce de blocage (26) et portant une butée (29) située à distance de la surface latérale (30) de la pièce de blocage (26).

3. Machine électrique selon la revendication 1 ou 2, caractérisée par le fait que la pièce de blocage (26) est pourvue d'un appendice (23) qui s'étend en direction radiale et elle est guidée sur le disque (11) du ventilateur sur toute la zone de déplacement radiale possible pour la pièce de blocage (26).

4. Machine à électrique selon l'une des revendications 1 à 3, caractérisée par le fait que l'appendice (15) du moyeu (10) et la pièce de blocage (26) présentent respectivement une surface oblique correspondante (16,18) venant porter l'une contre l'autre.

5. Machine électrique selon l'une des revendications 1 à 4, caractérisée par le fait que la pièce de blocage (26) possède la forme d'un segment annulaire.
